# EUROPÄISCHE PATENTSCHRIFT

(11) **EP 2 861 470 B1**
(45) Veröffentlichungstag und Bekanntmachung des Hinweises auf die Patenterteilung: **08.02.2017**
(21) Anmeldenummer: 13729008.6
(22) Anmeldetag: 07.06.2013
(51) Int. Cl.: B60S 1/38, B60S 1/40

(54) **WISCHBLATTADAPTERSYSTEM**
WIPER BLADE ADAPTER SYSTEM
SYSTÈME ADAPTATEUR DE BALAI D'ESSUIE-GLACE

(30) Priorität: 13.06.2012 DE 102012209867; 14.06.2012 DE 102012209966
(43) Veröffentlichungstag der Anmeldung: 22.04.2015
(73) Patentinhaber: Robert Bosch GmbH, 70442 Stuttgart (DE)
(72) Erfinder: DEPONDT, Helmut, B-3010 Kessel-Lo (BE)
(86) Internationale Anmeldenummer: PCT/EP2013/061797
(87) Internationale Veröffentlichungsnummer: WO 2013/186139

(56) Entgegenhaltungen:
- WO-A1-2010/028866
- DE-A1-102009 014 700
- DE-A1-102009 029 469
- DE-A1-102010 030 880

## Beschreibung

### Stand der Technik

Die Erfindung geht aus von einem Wischblattadaptersystem nach dem Oberbegriff des Patentanspruchs 1.

Die DE 2009 014 700 A1 offenbart ein solches Wischblattadaptersystem.

Es ist bereits ein Wischblattadaptersystem mit einer Wischblattadaptereinheit und mit zumindest zwei unterschiedlich geformten Verbindungselementen bekannt.

### Offenbarung der Erfindung

Die Erfindung geht aus von einem Wischblattadaptersystem mit einer Wischblattadaptereinheit und mit zumindest zwei unterschiedlich geformten Verbindungselementen.

Es wird vorgeschlagen, dass die Wischblattadaptereinheit eine Kopplungseinheit umfasst, die dazu vorgesehen ist, in einem Montagevorgang von einem Endbenutzer mit einem der zumindest zwei Verbindungselemente gekoppelt zu werden, wodurch bei einer einfachen Bauweise vorteilhaft unterschiedliche Wischarmadaptersysteme mit dem Wischblattadaptersystem gekoppelt werden können. Unter einer "Wischblattadaptereinheit" soll in diesem Zusammenhang insbesondere eine Einheit verstanden werden, die einen Kontaktbereich zu einem Verbindungselement aufweist und mit dem Verbindungselement unverlierbar verbindbar ist und ferner dazu vorgesehen ist, einen Kopplungsbereich eines Wischblattbauteils eines Wischblatts, wie insbesondere einer Federschiene, einer Wischleiste, eines Windabweiserelements und/oder einer Wischlippe, für eine Kopplung und/oder Kontaktierung mit dem Verbindungselement bereitzustellen. Unter "unterschiedlich geformt" soll in diesem Zusammenhang insbesondere verstanden werden, dass eine Ausformung eines Bauteils von einer Ausformung eines weiteren Bauteils abweicht. Unter einem "Verbindungselement" soll in diesem Zusammenhang insbesondere ein Element verstanden werden, das dazu vorgesehen ist, die Wischblattadaptereinheit mit einem Wischarm und/oder einem Wischarmadapter zu verbinden. Insbesondere ist das Verbindungselement dazu vorgesehen, einen Kopplungsbereich zur Kopplung eines Wischarms und/oder eines Wischarmadapters bereitzustellen. Insbesondere ist das Verbindungselement dazu vorgesehen, mit unterschiedlichen Bauarten von Wischarmadaptern gekoppelt zu werden. Unter "unterschiedlichen Bauarten von Wischarmadaptern" sollen in diesem Zusammenhang insbesondere verschiedene Wischarmadaptersysteme verstanden werden, die sich in ihrem Aufbau und/oder in ihrer Befestigungsfunktion unterscheiden. Bevorzugt handelt es sich um verschieden genormte Wischarmadaptersysteme. Unter einer ersten Bauart eines Wischarmadapters soll dabei in diesem Zusammenhang insbesondere ein Wischarmadapter verstanden werden, der einen Befestigungsstift und eine Auflageplatte aufweist. Unter einer weiteren möglichen Bauart eines Wischarmadapters soll dabei in diesem Zusammenhang insbesondere ein Wischarmadapter verstanden werden, der einen lang gestreckten hakenförmigen Grundkörper mit einer Biegung von 180° aufweist. Unter einer weiteren möglichen Bauart eines Wischarmadapters soll dabei in diesem Zusammenhang insbesondere ein Wischarmadapter verstanden werden, der zwei Rückanschläge und eine Befestigungsnase aufweist. Unter einer weiteren möglichen Bauart eines Wischarmadapters soll dabei in diesem Zusammenhang insbesondere ein Wischarmadapter verstanden werden, der eine Befestigungsausnehmung und einen Grundkörper mit einem s-förmigen Profil aufweist. Unter einer weiteren möglichen Bauart eines Wischarmadapters soll dabei in diesem Zusammenhang insbesondere ein Wischarmadapter verstanden werden, der eine Befestigungsausnehmung und Wandungen mit Befestigungsmitteln aufweist. Unter einer "Kopplungseinheit" soll dabei in diesem Zusammenhang insbesondere eine Einheit verstanden werden, die dazu vorgesehen ist, ein Wischblatt mit einem Wischarm zu koppeln. Unter einem "Koppeln" soll dabei in diesem Zusammenhang insbesondere ein kraft- und/oder formschlüssiges Verbinden verstanden werden. Unter einem "Montagevorgang" soll in diesem Zusammenhang insbesondere ein Vorgang verstanden werden, der von einem Endbenutzer beziehungsweise Endverbraucher durchgeführt wird, wobei bei dem Vorgang zumindest ein abschließender Montageschritt vorgenommen wird, durch den das Wischblattadaptersystem in einen Betriebszustand genommen werden kann. Unter einem "Endbenutzer" soll in diesem Zusammenhang insbesondere ein Endverbraucher und/oder eine Privatperson verstanden werden, der und/oder die zumindest gewöhnliche technische Fertigkeiten besitzt. Insbesondere weicht der Endbenutzer von einem Produktions- und/oder Werkstattmitarbeiter und/oder einer Person mit umfangreichen technischen Fertigkeiten und/oder einem Fachmann auf dem betreffenden technischen Gebiet ab. Weiterhin vorteilhaft erfolgt eine Montage durch den Endbenutzer werkzeuglos. Unter "vorgesehen" soll insbesondere speziell ausgelegt und/oder ausgestattet verstanden werden.

In einer weiteren Ausgestaltung der Erfindung wird vorgeschlagen, dass die zumindest zwei unterschiedlich geformten Verbindungselemente zu einer Kopplung mit unterschiedlichen Bauarten von Wischarmadaptern vorgesehen sind, wodurch das Wischblattadaptersystem vorteilhaft besonders flexibel angewendet werden kann.

Ferner wird vorgeschlagen, dass die Kopplungseinheit eine Führungseinheit umfasst, die dazu vorgesehen ist, eines der zumindest zwei Verbindungselemente bei einem Montagevorgang in einer Linearbewegung in einen Endkopplungszustand mit der Kopplungseinheit zu führen, wodurch ein Montagevorgang vorteilhaft schnell und einfach erfolgen kann. Unter einer "Führungseinheit" soll in diesem Zusammenhang insbesondere eine Einheit verstanden werden, die dazu vorgesehen ist, zumindest ein Bauteil gezielt in eine vordefinierte Richtung zu führen.

Des Weiteren wird vorgeschlagen, dass die Kopplungseinheit dazu vorgesehen ist, mit einem der zumindest zwei Verbindungselemente lösbar gekoppelt zu werden, wodurch das Wischblattadaptersystem vorteilhaft modular und flexibel eingesetzt werden kann. Unter "lösbar" soll in diesem Zusammenhang insbesondere zerstörungsfrei trennbar verstanden werden.

Umfasst die Kopplungseinheit zumindest ein erstes Kopplungselement, das in einem montierten Zustand formschlüssig an einem der zumindest zwei Verbindungselemente anliegt und dazu vorgesehen ist, ein Lösen des Verbindungselements von der Wischblattadaptereinheit zu vermeiden, kann eine besonders sichere Kopplung des Verbindungselements an der Wischblattadaptereinheit erreicht werden.

Eine weitere Erhöhung einer Kopplungssicherheit kann erreicht werden, wenn die Kopplungseinheit zumindest ein zweites Kopplungselement umfasst, das in einem montierten Zustand formschlüssig an einem der zumindest zwei Verbindungselemente anliegt und dazu vorgesehen ist, ein Lösen des Verbindungselements von der Wischblattadaptereinheit zu vermeiden.

Ein besonders schneller Montagevorgang kann durch einen Endbenutzer erreicht werden, wenn das erste Kopplungselement von einem ersten Rastelement gebildet ist. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden. Weiterhin vorteilhaft ist zusätzlich zumindest das zweite Kopplungselement von einem zweiten Rastelement gebildet.

Ist das erste Rastelement um eine Querachse federelastisch auslenkbar, kann eine besonders kompakte Bauweise des Wischblattadapters erzielt werden. Unter einer "Querachse" soll in diesem Zusammenhang insbesondere eine Achse verstanden werden, die sich zumindest im Wesentlichen parallel zu einer Wischrichtung erstreckt. Insbesondere verläuft die Querachse zumindest im Wesentlichen parallel zu einer zu wischenden Oberfläche. Weiterhin vorteilhaft ist zusätzlich das zweite Rastelement um eine Querachse federelastisch auslenkbar.

Die Wischblattadaptereinheit umfasst eine Lagereinheit, die dazu vorgesehen ist, zumindest eines der Verbindungselemente in einem montierten Zustand schwenkbar zu lagern, wodurch eine besonders hohe Beweglichkeit des Verbindungselements erreicht werden kann.

Besonders flexibel kann das Wischblattadaptersystem eingesetzt werden, wenn es zumindest drei unterschiedlich geformte Verbindungselemente aufweist, die zu einer Kopplung mit unterschiedlichen Bauarten von Wischarmadaptern vorgesehen sind.

Zumindest eines der zumindest zwei Verbindungselemente weist einen Verbindungsbolzen zur schwenkbaren Lagerung relativ zur Wischblattadaptereinheit auf. Unter einem "Verbindungsbolzen" soll in diesem Zusammenhang insbesondere ein Bolzen verstanden werden, der in einem montierten Zustand zu einer Kraftübertragung zwischen dem Verbindungselement und der Wischblattadaptereinheit vorgesehen ist. Insbesondere weist der Verbindungsbolzen einen teilweise runden, bevorzugt einen kreisrunden Querschnitt auf.

In einer weiteren Ausgestaltung der Erfindung wird vorgeschlagen, dass zumindest das erste Rastelement den zumindest einen Verbindungsbolzen in einem montierten Zustand zumindest teilweise umschließt, wodurch eine besonders sichere Lagerung des Verbindungselements am Wischblattadapter erreicht werden kann. Unter "umschließen" soll in diesem Zusammenhang insbesondere flächig anliegen und/oder flächig an einer gekrümmten Lagerfläche anliegen verstanden werden, wobei in zumindest einer Schnittebene ein Bauteil von einem anderen Bauteil an einer Außenkontur um zumindest 30 %, bevorzugt um zumindest 50 %, besonders bevorzugt um zumindest 70 % umgriffen ist.

Des Weiteren wird vorgeschlagen, dass zumindest ein Verbindungselement der zumindest zwei Verbindungselemente eine Querausnehmung aufweist, die zur Aufnahme eines Verbindungsbolzens vorgesehen ist, wodurch vorteilhaft auf einfache Weise eine schwenkbare Lagerung des Verbindungselements am Wischblattadapter erreicht werden kann.

Ferner wird vorgeschlagen, dass die Querausnehmung des zumindest einen Verbindungselements der zumindest zwei Verbindungselemente, in einer Längsrichtung des Verbindungselements betrachtet, im Bereich des Verbindungsbolzens angeordnet ist. Dadurch können Belastungen des Verbindungselements durch vom Wischarm ausgeübte Kräfte vorteilhaft verringert werden. Unter einem "Bereich" soll in diesem Zusammenhang insbesondere ein Gebiet mit einer beliebigen maximalen Erstreckung von weniger als 10 mm, bevorzugt von weniger 5 mm, besonders bevorzugt von weniger als 3 mm verstanden werden. In einer zusätzlichen Ausgestaltung wird vorgeschlagen, dass die Querausnehmung des Verbindungselements der zumindest zwei Verbindungselemente, in einer Längsrichtung des Verbindungselements betrachtet, relativ zum Verbindungsbolzen, auf gleicher Höhe und/oder in Vertikalrichtung versetzt angeordnet ist. Unter "auf gleicher Höhe" soll in diesem Zusammenhang insbesondere versatzfrei verstanden werden. Unter einer "Längsrichtung" soll in diesem Zusammenhang insbesondere eine Richtung verstanden werden, die sich im Wesentlichen parallel zu einer Längserstreckung des Verbindungselements erstreckt. Unter einer "Längserstreckung" soll in diesem Zusammenhang insbesondere eine größtmögliche Erstreckung verstanden werden.

In einer weiteren Ausgestaltung der Erfindung wird vorgeschlagen, dass zumindest ein Verbindungselement der zumindest zwei Verbindungselemente eine Längsausnehmung aufweist, die das Verbindungselement in eine Vertikalrichtung hin öffnet und die zur Aufnahme eines Wischarmadapterendbereichs vorgesehen ist, wodurch ein Wischarmadapter besonders sicher mit dem Verbindungselement gekoppelt werden kann.

Eine besonders einfache Montage kann erreicht werden, wenn zumindest ein Verbindungselement der zumindest zwei Verbindungselemente eine Seitenausformung aufweist. Unter einer "Seitenausformung" soll in diesem Zusammenhang insbesondere eine Ausformung verstanden werden, die aus einer Wandung heraustritt und dazu vorgesehen ist, einen Griffbereich für einen Benutzer bereitzustellen.

In einer zusätzlichen Ausgestaltung wird vorgeschlagen, dass die Wischblattadaptereinheit zumindest zwei Längsstege aufweist, die zumindest im Wesentlichen parallel zueinander verlaufen und an einem Grundkörper der Wischblattadaptereinheit angeordnet sind, wodurch eine besonders große Kontaktfläche für eine Wischleiste erzielt werden kann.

Eine Beschädigung und/oder ein übermäßiges Auslenken der Kopplungselemente durch eine unsachgemäße Bedienung kann vorteilhaft vermieden werden, wenn die Wischblattadaptereinheit einen Sicherheitssteg aufweist, der, in einer Wischrichtung betrachtet, zwischen dem ersten Kopplungselement und dem zweiten Kopplungselement angeordnet und dazu vorgesehen ist, das erste Kopplungselement und das zweite Kopplungselement vor einer Montagebeschädigung zu schützen. Unter einem Sicherheitssteg soll in diesem Zusammenhang insbesondere ein Steg verstanden werden, der einen Anschlag für ein Befestigungsbauteil bildet.

Weiterhin vorteilhaft weist die Wischblattadaptereinheit eine Schräganschlagfläche auf, die dazu vorgesehen ist, eine Auslenkung eines Verbindungselements der zumindest zwei Verbindungselemente relativ zu einem Grundkörper der Wischblattadaptereinheit zu begrenzen, wodurch ein übermäßiges Schwenken eines Verbindungselements relativ zum Grundkörper vorteilhaft vermieden werden kann.

Ferner wird ein Verfahren vorgeschlagen, wobei ein Verbindungselement von einem Wischblattadapter gelöst wird, indem das Verbindungselement einseitig angehoben wird, wodurch ein besonders einfaches Lösen des Verbindungselements vom Wischblatt erreicht werden kann. Unter "einseitig" soll in diesem Zusammenhang insbesondere, in einer Längsrichtung betrachtet, in lediglich einem Randbereich des Verbindungselements verstanden werden. Unter "anheben" soll in diesem Zusammenhang insbesondere von einer Wischfläche wegbewegen verstanden werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: drei Verbindungselemente eines erfindungsgemäßen Wischblattadaptersystems und einen Wischarmadapter von verschiedenen Wischarmadaptersystemen in einer perspektivischen Ansicht,
- Fig. 2: eine Wischblattadaptereinheit des Wischblattadaptersystems aus Figur 1 in einer perspektivischen Ansicht,
- Fig. 3: die Wischblattadaptereinheit aus Figur 2 und ein Verbindungselement in einem Teilschnitt,
- Fig. 4: die Wischblattadaptereinheit aus Figur 2 und das Verbindungselement aus Figur 3 in einem weiteren Teilschnitt und
- Fig. 5: die Wischblattadaptereinheit aus Figur 2 und das Verbindungselement aus Figur 3 in einem montierten Zustand.

### Beschreibung des Ausführungsbeispiels

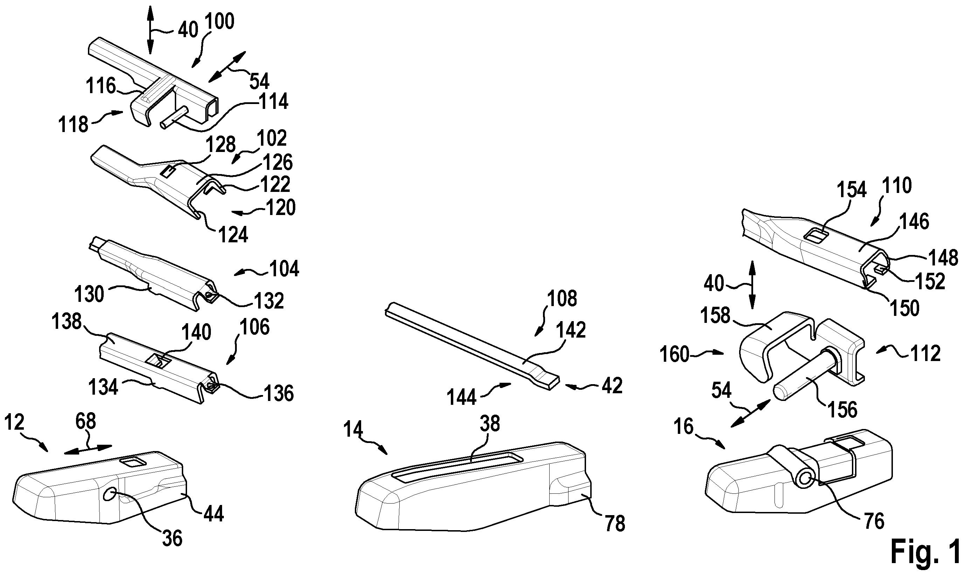

Figur 1 zeigt drei unterschiedlich geformte Verbindungselemente 12, 14, 16 eines erfindungsgemäßen Wischblattadaptersystems. Das Wischblattadaptersystem ist zur Kopplung verschiedener Wischarmadaptersysteme mit einem Wischblatt 58 vorgesehen. Dazu sind die drei unterschiedlich geformten Verbindungselemente 12, 14, 16 zu einer Kopplung mit unterschiedlichen Bauarten von Wischarmadaptern 100, 102, 104, 106, 108, 110, 112 vorgesehen. Die Wischarmadapter 100, 102, 104, 106, 108, 110, 112 der unterschiedlichen Wischarmadaptersysteme sind bereits aus dem Stand der Technik bekannt und zumindest teilweise genormt.

Das erste Verbindungselement 12 ist zur Kopplung mit vier unterschiedlich ausgeformten Wischarmadaptern 100, 102, 104, 106 vorgesehen. Der erste Wischarmadapter 100 weist dabei einen Befestigungsstift 114 und eine Auflageplatte 116 auf. Der Befestigungsstift 114 erstreckt sich parallel zu einer Wischrichtung 54 des Wischblattadaptersystems. Die Auflageplatte 116 erstreckt sich zunächst parallel zum Befestigungsstift 114 und knickt in einem Endbereich 118 um 90° in eine Vertikalrichtung 40 des Wischblattadaptersystems ab. Der zweite Wischarmadapter 102 weist einen U-förmigen Aufnahmebereich 120 auf, der von zwei parallel zueinander verlaufenden Seitenwandungen 122, 124 und einer Auflagewandung 126 aufgespannt ist. Die Auflagewandung 126 ist senkrecht zu den Seitenwandungen 122, 124 angeordnet. In der Auflagewandung 126 ist eine Positionierungsausnehmung 128 angeordnet, die zu einer definierten Positionierung des zweiten Wischarmadapters 102 am Verbindungselement 12 vorgesehen ist. Der dritte Wischarmadapter 104 weist zwei Rückanschläge 130, die von Seitenwandungen gebildet sind, und eine Befestigungsnase 132 auf. Die Befestigungsnase 132 ist an einem freien Ende des dritten Wischarmadapters 104 als Fortsatz ausgebildet. Der vierte Wischarmadapter 106 weist zwei Rückanschläge 134, die von Seitenwandungen gebildet sind, und eine Befestigungsnase 136 auf. Die Befestigungsnase 136 ist an einem freien Ende des vierten Wischarmadapters 106 als Fortsatz ausgebildet. Ferner umfasst der vierte Wischarmadapter 106 eine Auflagewandung 138, in welcher eine Positionierungsausnehmung 140 angeordnet ist, die zu einer definierten Positionierung des vierten Wischarmadapters 106 am Verbindungselement 12 vorgesehen ist. Der erste Wischarmadapter 100, der zweite Wischarmadapter 102, der dritte Wischarmadapter 104 und der vierte Wischarmadapter 106 sind auf eine bekannte Art und Weise mit dem ersten Verbindungselement 12 lösbar koppelbar.

Das zweite Verbindungselement 14 ist zur Kopplung mit einem fünften Wischarmadapter 108 vorgesehen, der eine weitere Bauart aufweist. Der fünfte Wischarmadapter 108 weist einen Befestigungsarm 142 auf, der in einem Endbereich 144 eine S-förmige Biegung aufweist. Der fünfte Wischarmadapter 108 ist auf eine bekannte Art und Weise mit dem zweiten Verbindungselement 14 lösbar koppelbar.

Das dritte Verbindungselement 16 ist zur Kopplung mit einem sechsten Wischarmadapter 110 und einem siebten Wischarmadapter 112 vorgesehen, die jeweils in einer weiteren Bauweise ausgeformt sind. Der sechste Wischarmadapter 110 weist eine Grundwandung 146 auf, an welcher zwei Seitenwandungen 148, 150 angeordnet sind. Die Seitenwandungen 148, 150 schließen jeweils mit der Grundwandung 146 einen Winkel von 90° ein. An einem unteren Ende der jeweiligen Seitenwandung 148, 150 sind Befestigungsmittel 152 angeordnet, die wiederum einen Winkel von 90° zu den Seitenwandungen 148, 150 einschließen. In der Grundwandung 146 des Wischarmadapters 110 ist zusätzlich eine Befestigungsausnehmung 154 angeordnet. Der siebte Wischarmadapter 112 weist einen Befestigungsstift 156 und eine Auflageplatte 158 auf. Der Befestigungsstift 156 erstreckt sich parallel zu einer Wischrichtung 54 des Wischblattadaptersystems. Die Auflageplatte 158 erstreckt sich zunächst parallel zum Befestigungsstift 156 und knickt in einem Endbereich 160 um 90° in die Vertikalrichtung 40 ab. Der sechste Wischarmadapter 110 und der siebte Wischarmadapter 112 sind auf eine bekannte Art und Weise mit dem dritten Verbindungselement 16 lösbar koppelbar.

Das erste Verbindungselement 12 weist eine Querausnehmung 36 auf, die zur Aufnahme des Befestigungsstifts 114 des Wischarmadapters 100 vorgesehen ist. Das erste Verbindungselement 12 weist eine Seitenausformung 44 auf. Die Seitenausformung 44 tritt aus einer Wandung des ersten Verbindungselements 12 heraus und bildet einen Griffbereich für einen Benutzer. Das zweite Verbindungselement 14 weist eine Längsausnehmung 38 auf, die das Verbindungselement 14 in Vertikalrichtung 40 hin öffnet und die zur Aufnahme eines Wischarmadapterendbereichs 42 vorgesehen ist.

Das zweite Verbindungselement 14 weist eine Seitenausformung 78 auf. Die Seitenausformung 78 tritt aus einer Wandung des zweiten Verbindungselements 14 heraus und bildet einen Griffbereich für einen Benutzer. Das dritte Verbindungselement 16 weist eine Querausnehmung 76 auf, die zur Aufnahme des Befestigungsstifts 156 des Wischarmadapters 112 vorgesehen ist.

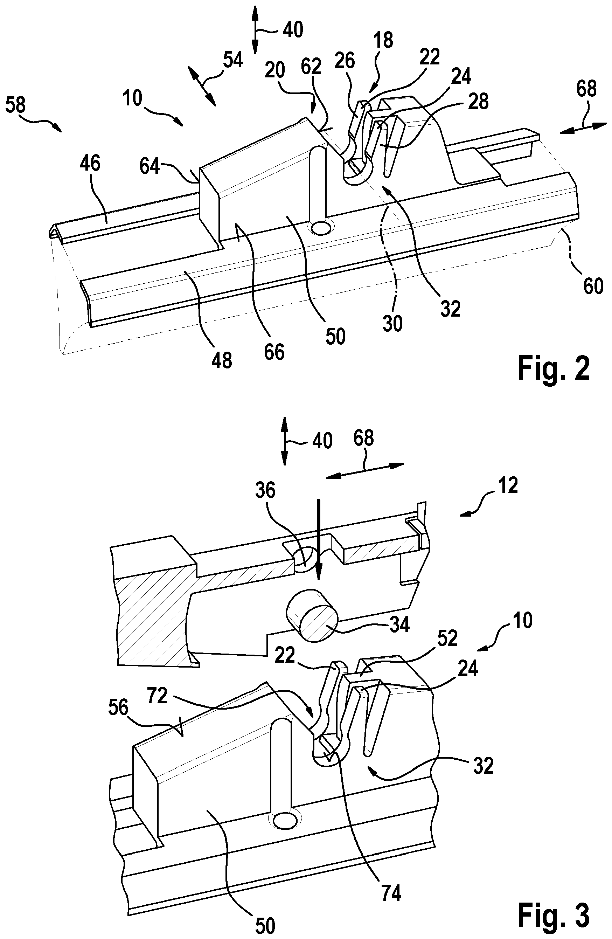

Das Wischblattadaptersystem weist ferner eine Wischblattadaptereinheit 10 auf, wie in Figur 2 gezeigt. Die Wischblattadaptereinheit 10 umfasst eine Kopplungseinheit 18, die dazu vorgesehen ist, in einem Montagevorgang von einem Endbenutzer mit einem der drei Verbindungselemente 12, 14, 16 gekoppelt zu werden. Die Wischblattadaptereinheit 10 weist dazu einen Kontaktbereich zu einem der drei Verbindungselemente 12, 14, 16 auf. In einem montierten Zustand ist die Wischblattadaptereinheit 10 mit einem der drei Verbindungselemente 12, 14, 16 unverlierbar verbunden.

Die Wischblattadaptereinheit 10 weist zwei Längsstege 46, 48 auf, die parallel zueinander verlaufen und an einem Grundkörper 50 der Wischblattadaptereinheit 10 angeordnet sind. Die Längsstege 46, 48 sind zu einer Verbindung mit weiteren Bauteilen des Wischblatts 58 vorgesehen, wie insbesondere einer Wischleiste 60, einer Federschiene, einem Windabweiser und/oder einer Wischlippe.

Die Kopplungseinheit 18 umfasst eine Führungseinheit 20, die eines der drei Verbindungselemente 12, 14, 16 bei einem Montagevorgang in einer Linearbewegung in einen Endkopplungszustand mit der Kopplungseinheit 18 führt. Zur Führung eines der drei Verbindungselemente 12, 14, 16 weist die Führungseinheit 20 eine Führungsfläche 62 auf, die sich zumindest im Wesentlichen parallel zur Vertikalrichtung 40 und parallel zur Wischrichtung 54 erstreckt. Somit erstreckt sich die Führungsfläche 62 zumindest im Wesentlichen senkrecht zu einer Längsrichtung 68 des Wischblattadaptersystems.

Die Führungsfläche 62 ist von dem Grundkörper 50 gebildet. Die Führungseinheit 20 umfasst ferner zwei Seitenflächen 64, 66, die sich senkrecht zur Wischrichtung 54 erstrecken. Die Linearbewegung erfolgt zumindest im Wesentlichen parallel zur Vertikalrichtung 40. Eine Schwenkbewegung des zu koppelnden Verbindungselements 12, 14, 16 während des Montagevorgangs ist vermieden. Das zu koppelnde Verbindungselement 12, 14, 16 wird bei dem Montagevorgang von der Führungseinheit 20 in eine vordefinierte Richtung geführt (Figur 3).

Die Kopplungseinheit 18 ist dazu vorgesehen, mit einem der drei Verbindungselemente 12, 14, 16 lösbar gekoppelt zu werden. In anderen Worten lässt sich ein mit der Kopplungseinheit 18 gekoppeltes Verbindungselement 12, 14, 16 von der Kopplungseinheit 18 wieder zerstörungsfrei trennen. Dazu umfasst die Kopplungseinheit 18 ein erstes Kopplungselement 22 und ein zweites Kopplungselement 24, das im montierten Zustand formschlüssig an einem der drei Verbindungselemente 12, 14, 16 anliegt und ein Lösen der Verbindungselemente 12, 14, 16 von der Wischblattadaptereinheit 10 vermeidet. Das erste Kopplungselement 22 ist von einem ersten Rastelement 26 gebildet. Das zweite Kopplungselement 24 ist von einem zweiten Rastelement 28 gebildet. Das erste Rastelement 26 und das zweite Rastelement 28 sind dabei als federelastische Elemente ausgebildet, die zur Herstellung einer Rastverbindung vorgesehen sind.

Das erste Rastelement 26 ist um eine gedachte Querachse 30 federelastisch auslenkbar. Das zweite Rastelement 28 ist um dieselbe Querachse 30 federelastisch auslenkbar. Die Querachse 30 erstreckt sich zumindest im Wesentlichen parallel zur Wischrichtung 54 und somit auch zumindest im Wesentlichen parallel zu einer vom Wischblatt 58 zu wischenden Oberfläche.

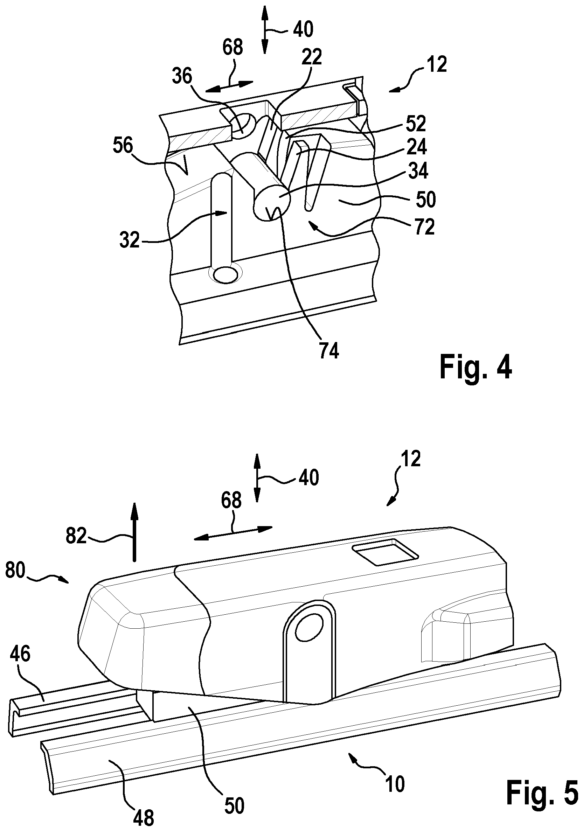

Die Wischblattadaptereinheit 10 umfasst ferner eine Lagereinheit 32, die eines der Verbindungselemente 12, 14, 16 im montierten Zustand schwenkbar lagert. Zur Kopplung und Lagerung weisen die drei Verbindungselemente 12, 14, 16 jeweils einen Verbindungsbolzen 34 zur schwenkbaren Lagerung relativ zur Wischblattadaptereinheit 10 auf. In den Figuren 3 und 4 ist das erste Verbindungselement 12 beispielhaft für alle drei Verbindungselemente 12, 14, 16 in einem Teilschnitt gezeigt.

Der Verbindungsbolzen 34 ist im montierten Zustand zu einer Kraftübertragung zwischen dem Verbindungselement 12 und der Wischblattadaptereinheit 10 vorgesehen. Der Verbindungsbolzen 34 weist einen kreisrunden Querschnitt auf. In einer Haupterstreckungsrichtung verläuft der Verbindungsbolzen 34 parallel zur Wischrichtung 54. Ein Durchmesser des Verbindungsbolzens 34 ist größer als ein kleinster Abstand zwischen der Führungsfläche 62 und den Rastelementen 26, 28. Bei einer Montage lenkt der Verbindungsbolzen 34 daher die Rastelemente 26, 28 entgegen einer Federkraft aus einer Ausgangsposition aus.

Die Rastelemente 26, 28 und die Führungsfläche 62 enden an der Lagereinheit 32. Die Lagereinheit 32 umfasst einen offenen Querkanal 72, der eine gekrümmte Lagerfläche 74 aufweist. Im montierten Zustand liegt der Verbindungsbolzen 34 flächig an der Lagerfläche 74 an. Die Rastelemente 26, 28 bewegen sich federelastisch zurück in die Ausgangsposition und liegen zuletzt formschlüssig am Verbindungsbolzen 34 an.

Wie in Figur 4 gezeigt, umschließen das erste Rastelement 26 und das zweite Rastelement 28 den Verbindungsbolzen 34 in einem montierten Zustand teilweise. Eine translatorische Bewegung des Verbindungsbolzens 34 in Vertikalrichtung 40 ist somit vermieden. Eine Schwenkbewegung des Verbindungsbolzens 34 und mithin des Verbindungselements 12 ist aufgrund des kreisrunden Querschnitts des Verbindungsbolzens 34 und der gekrümmten Lagerfläche 74 ermöglicht.

Die Querausnehmung 36 des ersten Verbindungselements 12 ist dabei, in Längsrichtung 68 des Verbindungselements 12 betrachtet, im Bereich des Verbindungsbolzens 34 angeordnet. In anderen Worten ist die Querausnehmung 36 des ersten Verbindungselements 12, in Längsrichtung 68 des Verbindungselements 12 betrachtet, auf gleicher Höhe und in Vertikalrichtung 40 versetzt angeordnet.

Die Wischblattadaptereinheit 10 weist einen Sicherheitssteg 52 auf, der, in Wischrichtung 54 betrachtet, zwischen dem ersten Kopplungselement 22 und dem zweiten Kopplungselement 24 angeordnet ist. Der Sicherheitssteg 52 bildet einen Anschlag für den Verbindungsbolzen 34, wenn die Kopplungselemente 22, 24 zu weit ausgelenkt werden. Somit schützt der Sicherheitssteg 52 das erste Kopplungselement 22 und das zweite Kopplungselement 24 vor einer Montagebeschädigung. Die Wischblattadaptereinheit 10 weist ferner eine Schräganschlagfläche 56 auf, die eine Auslenkung des montierten Verbindungselements 12, 14, 16 relativ zum Grundkörper 50 der Wischblattadaptereinheit 10 begrenzt.

In Figur 5 ist das Verbindungselement 12 mit der Wischblattadaptereinheit 10 in einem gekoppelten Zustand und dazu vorgesehen, mit einem der Wischarmadapter 100, 102, 104, 106 gekoppelt zu werden. Zu einer Demontage wird das Verbindungselement 12 von der Wischblattadaptereinheit 10 gelöst. Dafür wird das Verbindungselement 12 einseitig angehoben. Anders ausgedrückt, übt ein Benutzer zu einer Demontage eine Anhebekraft 82 in einem Anhebebereich 80 aus, der an einem freien Ende des Verbindungselements 12 angeordnet ist. Die Anhebekraft 82 verläuft zumindest im Wesentlichen parallel zur Vertikalrichtung 40.

Der Anhebebereich 80 ist der Seitenausformung 44 gegenüberliegend angeordnet. Beim Anheben wird das Verbindungselement 12 von einer nicht gezeigten Wischfläche wegbewegt. Die Rastelemente 26, 28 werden daraufhin wieder von dem Verbindungsbolzen 34 ausgelenkt und geben somit das Verbindungselement 12 frei.

## Patentansprüche

1. Wischblattadaptersystem mit einer Wischblattadaptereinheit (10) und mit zumindest zwei unterschiedlich geformten Verbindungselementen (12, 14, 16), wobei die Wischblattadaptereinheit (10) eine Kopplungseinheit (18) umfasst, die dazu vorgesehen ist, in einem Montagevorgang von einem Endbenutzer mit einem der zumindest zwei Verbindungselemente (12, 14, 16) gekoppelt zu werden, wobei die Wischblattadaptereinheit (10) eine Lagereinheit (32) umfasst, die dazu vorgesehen ist, zumindest eines der Verbindungselemente (12, 14, 16) in einem montierten Zustand schwenkbar zu lagern, **dadurch gekennzeichnet, dass** zumindest eines der zumindest zwei Verbindungselemente (12, 14, 16) einen Verbindungsbolzen (34) zur schwenkbaren Lagerung relativ zur Wischblattadaptereinheit (10) aufweist, wobei die Lagereinheit (32) einen offenen Querkanal (72) umfasst, der eine gekrümmte Lagerfläche (74) aufweist, und der Verbindungsbolzen (34) im montierten Zustand flächig an der Lagerfläche (74) anliegt.

2. Wischblattadaptersystem nach Anspruch 1, **dadurch gekennzeichnet, dass** die zumindest zwei unterschiedlich geformten Verbindungselemente (12, 14, 16) zu einer Kopplung mit unterschiedlichen Bauarten von Wischarmadaptern (100, 102, 104, 106, 108, 110, 112) vorgesehen sind.

3. Wischblattadaptersystem nach Anspruch 1 oder 2, **dadurch gekennzeichnet, dass** die Kopplungseinheit (18) eine Führungseinheit (20) umfasst, die dazu vorgesehen ist, eines der zumindest zwei Verbindungselemente (12, 14, 16) bei einem Montagevorgang in einer Linearbewegung in einen Endkopplungszustand mit der Kopplungseinheit (18) zu führen.

4. Wischblattadaptersystem nach einem der vorhergehenden Ansprüche, **dadurch gekennzeichnet, dass** die Kopplungseinheit (18) dazu vorgesehen ist, mit einem der zumindest zwei Verbindungselemente (12, 14, 16) lösbar gekoppelt zu werden.

5. Wischblattadaptersystem nach einem der vorhergehenden Ansprüche, **dadurch gekennzeichnet, dass** die Kopplungseinheit (18) zumindest ein erstes Kopplungselement (22) umfasst, das in einem montierten Zustand formschlüssig an einem der zumindest zwei Verbindungselemente (12, 14, 16) anliegt und dazu vorgesehen ist, ein Lösen des Verbindungselements (12, 14, 16) von der Wischblattadaptereinheit (10) zu vermeiden.

6. Wischblattadaptersystem nach Anspruch 5, **dadurch gekennzeichnet, dass** die Kopplungseinheit (18) zumindest ein zweites Kopplungselement (24) umfasst, das in einem montierten Zustand formschlüssig an einem der zumindest zwei Verbindungselemente (12, 14, 16) anliegt und dazu vorgesehen ist, ein Lösen des Verbindungselements (12, 14, 16) von der Wischblattadaptereinheit (10) zu vermeiden.

7. Wischblattadaptersystem zumindest nach Anspruch 5, **dadurch gekennzeichnet, dass** das erste Kopplungselement (22) von einem ersten Rastelement (26) gebildet ist.

8. Wischblattadaptersystem nach Anspruch 7, **dadurch gekennzeichnet, dass** das erste Rastelement (26) um eine Querachse (30) federelastisch auslenkbar ist.

9. Wischblattadaptersystem zumindest nach Anspruch 6, **dadurch gekennzeichnet, dass** zumindest das zweite Kopplungselement (24) von einem zweiten Rastelement (28) gebildet ist.

10. Wischblattadaptersystem nach Anspruch 9, **dadurch gekennzeichnet, dass** das zweite Rastelement (28) um eine Querachse (30) federelastisch auslenkbar ist.

11. Wischblattadaptersystem nach einem der vorhergehenden Ansprüche, **gekennzeichnet durch** zumindest drei unterschiedlich geformte Verbindungselemente (12, 14, 16), die zu einer Kopplung mit unterschiedlichen Bauarten von Wischarmadaptern (100, 102, 104, 106, 108, 110, 112) vorgesehen sind.

12. Wischblattadaptersystem zumindest nach Anspruch 7, **dadurch gekennzeichnet, dass** zumindest das erste Rastelement (26) den zumindest einen Verbindungsbolzen (34) in einem montierten Zustand zumindest teilweise umschließt.

13. Wischblattadaptersystem nach einem der vorhergehenden Ansprüche, **dadurch gekennzeichnet, dass** zumindest ein Verbindungselement (12, 16) der zumindest zwei Verbindungselemente (12, 14, 16) eine Querausnehmung (36, 76) aufweist, die zur Aufnahme eines Befestigungsstifts (114, 156) eines Wischarmadapters (100, 112) vorgesehen ist.

14. Wischblattadaptersystem nach Anspruch 13, **dadurch gekennzeichnet, dass** die Querausnehmung (36, 76) des zumindest einen Verbindungselements (12, 16) der zumindest zwei Verbindungselemente (12, 14, 16), in einer Längsrichtung (68) des Verbindungselements (12, 16) betrachtet, im Bereich des Verbindungsbolzens (34) angeordnet ist.

15. Wischblattadaptersystem nach einem der vorhergehenden Ansprüche, **dadurch gekennzeichnet, dass** zumindest ein Verbindungselement (14) der zumindest zwei Verbindungselemente (12, 14, 16) eine Längsausnehmung (38) aufweist, die das Verbindungselement (14) in eine Vertikalrichtung (40) hin öffnet und die zur Aufnahme eines Wischarmadapterendbereichs (42) vorgesehen ist.

16. Wischblattadaptersystem nach einem der vorhergehenden Ansprüche, **dadurch gekennzeichnet, dass** zumindest ein Verbindungselement (12, 14) der zumindest zwei Verbindungselemente (12, 14, 16) eine Seitenausformung (44) aufweist.

17. Wischblattadaptersystem nach einem der vorhergehenden Ansprüche, **dadurch gekennzeichnet, dass** die Wischblattadaptereinheit (10) zumindest zwei Längsstege (46, 48) aufweist, die zumindest im Wesentlichen parallel zueinander verlaufen und an einem Grundkörper (50) der Wischblattadaptereinheit (10) angeordnet sind.

18. Wischblattadaptersystem zumindest nach Anspruch 6, **dadurch gekennzeichnet, dass** die Wischblattadaptereinheit (10) einen Sicherheitssteg (52) aufweist, der, in einer Wischrichtung (54) betrachtet, zwischen dem ersten Kopplungselement (22) und dem zweiten Kopplungselement (24) angeordnet und dazu vorgesehen ist, das erste Kopplungselement (22) und das zweite Kopplungselement (24) vor einer Montagebeschädigung zu schützen.

19. Wischblattadaptersystem nach einem der vorhergehenden Ansprüche, **dadurch gekennzeichnet, dass** die Wischblattadaptereinheit (10) eine Schräganschlagfläche (56) aufweist, die dazu vorgesehen ist, eine Auslenkung eines Verbindungselements (12, 14, 16) der zumindest zwei Verbindungselemente (12, 14, 16) relativ zu einem Grundkörper (50) der Wischblattadaptereinheit (10) zu begrenzen.

20. Wischblatt (58) mit einem Wischblattadaptersystem nach einem der vorhergehenden Ansprüche.

## Claims

1. Wiper blade adapter system with a wiper blade adapter unit (10) and with at least two differently shaped connecting elements (12, 14, 16), wherein the wiper blade adapter unit (10) comprises a coupling unit (18) which is provided to be coupled by an end user in a mounting operation to one of the at least two connecting elements (12, 14, 16), wherein the wiper blade adapter unit (10) comprises a bearing unit (32) which is provided to pivotably support at least one of the connecting elements (12, 14, 16) in a mounted state, **characterized in that** at least one of the at least two connecting elements (12, 14, 16) has a connecting bolt (34) for the pivotable support relative to the wiper blade adapter unit (10), wherein the bearing unit (32) comprises an open transverse channel (72) which has a curved bearing surface (74), and the connecting bolt (34) lies flat against the bearing surface (74) in the mounted state.

2. Wiper blade adapter system according to Claim 1, **characterized in that** the at least two differently shaped connecting elements (12, 14, 16) are provided for coupling to different types of wiper arm adapters (100, 102, 104, 106, 108, 110, 112).

3. Wiper blade adapter system according to Claim 1 or 2, **characterized in that** the coupling unit (18) comprises a guide unit (20) which is provided for guiding one of the at least two connecting elements (12, 14, 16) in a linear movement into a final coupling state with the coupling unit (18) during a mounting operation.

4. Wiper blade adapter system according to one of the preceding claims, **characterized in that** the coupling unit (18) is provided to be releasably coupled to one of the at least two connecting elements (12, 14, 16).

5. Wiper blade adapter system according to one of the preceding claims, **characterized in that** the coupling unit (18) comprises at least one first coupling element (22) which, in a mounted state, lies in a form-fitting manner against one of the at least two connecting elements (12, 14, 16) and is provided for avoiding release of the connecting element (12, 14, 16) from the wiper blade adapter unit (10).

6. Wiper blade adapter system according to Claim 5, **characterized in that** the coupling unit (18) comprises at least one second coupling element (24) which, in a mounted state, lies in a form-fitting manner against one of the at least two connecting elements (12, 14, 16) and is provided for avoiding release of the connecting element (12, 14, 16) from the wiper blade adapter unit (10).

7. Wiper blade adapter system at least according to Claim 5, **characterized in that** the first coupling element (22) is formed by a first latching element (26).

8. Wiper blade adapter system according to Claim 7, **characterized in that** the first latching element (26) is deflectable spring-elastically about a transverse axis (30).

9. Wiper blade adapter system at least according to Claim 6, **characterized in that** at least the second coupling element (24) is formed by a second latching element (28).

10. Wiper blade adapter system according to Claim 9, **characterized in that** the second latching element (28) is deflectable spring-elastically about a transverse axis (30).

11. Wiper blade adapter system according to one of the preceding claims, **characterized by** at least three differently shaped connecting elements (12, 14, 16) which are provided for coupling to different types of wiper arm adapters (100, 102, 104, 106, 108, 110, 112).

12. Wiper blade adapter system at least according to Claim 7, **characterized in that** at least the first latching element (26) at least partially surrounds the at least one connecting bolt (34) in a mounted state.

13. Wiper blade adapter system according to one of the preceding claims, **characterized in that** at least one connecting element (12, 16) of the at least two connecting elements (12, 14, 16) has a transverse recess (36, 76) which is provided for receiving a fastening pin (114, 156) of a wiper arm adapter (100, 112).

14. Wiper blade adapter system according to Claim 13, **characterized in that** the transverse recess (36, 76) of the at least one connecting element (12, 16) of the at least two connecting elements (12, 14, 16) is arranged in the region of the connecting bolt (34), as viewed in a longitudinal direction (68) of the connecting element (12, 16).

15. Wiper blade adapter system according to one of the preceding claims, **characterized in that** at least one connecting element (14) of the at least two connecting elements (12, 14, 16) has a longitudinal recess (38) which opens the connecting element (14) in a vertical direction (40) and which is provided for receiving a wiper arm adapter end region (42).

16. Wiper blade adapter system according to one of the preceding claims, **characterized in that** at least one connecting element (12, 14) of the at least two connecting elements (12, 14, 16) has a side formation (44).

17. Wiper blade adapter system according to one of the preceding claims, **characterized in that** the wiper blade adapter unit (10) has at least two longitudinal webs (46, 48) which run at least substantially parallel to each other and are arranged on a basic body (50) of the wiper blade adapter unit (10).

18. Wiper blade adapter system at least according to Claim 6, **characterized in that** the wiper blade adapter unit (10) has a safety web (52) which, as viewed in a wiping direction (54), is arranged between the first coupling element (22) and the second coupling element (24) and is provided for protecting the first coupling element (22) and the second coupling element (24) against damage during mounting.

19. Wiper blade adapter system according to one of the preceding claims, **characterized in that** the wiper blade adapter unit (10) has an oblique stop surface (56) which is provided for limiting a deflection of one connecting element (12, 14, 16) of the at least two connecting elements (12, 14, 16) relative to a basic body (50) of the wiper blade adapter unit (10).

20. Wiper blade (58) with a wiper blade adapter system according to one of the preceding claims.

## Revendications

1. Système adaptateur de balai d'essuie-glace comprenant une unité d'adaptateur de balai d'essuie-glace (10) et comprenant au moins deux éléments de connexion formés différemment (12, 14, 16), l'unité d'adaptateur de balai d'essuie-glace (10) comprenant une unité d'accouplement (18) qui, lors d'une opération de montage par utilisateur final, est prévue pour être accouplée à l'un des au moins deux éléments de connexion (12, 14, 16), l'unité d'adaptateur de balai d'essuie-glace (10) comprenant une unité de palier (32) qui est prévue pour supporter de manière pivotante au moins l'un des éléments de connexion (12, 14, 16) dans un état monté,
**caractérisé en ce**
**qu'**au moins l'un des au moins deux éléments de connexion (12, 14 à 16) présente un boulon de connexion (34) pour le support sur palier pivotant par rapport à l'unité d'adaptateur de balai d'essuie-glace (10), l'unité de palier (32) comprenant un canal transversal ouvert (72) qui présente une surface de palier courbe (74) et le boulon de connexion (34) s'appliquant dans l'état monté à plat contre la surface de palier (74).

2. Système adaptateur de balai d'essuie-glace selon la revendication 1, **caractérisé en ce que** les au moins deux éléments de connexion formés différemment (12, 14, 16) sont prévus pour être accouplés à différents types d'adaptateurs de bras d'essuie-glace (100, 102, 104, 106, 108, 110, 112).

3. Système adaptateur de balai d'essuie-glace selon la revendication 1 ou 2, **caractérisé en ce que** l'unité d'accouplement (18) comprend une unité de guidage (20) qui est prévue pour guider l'un des au moins deux éléments de connexion (12, 14, 16), lors d'une opération de montage, suivant un mouvement linéaire dans un état d'accouplement final avec l'unité d'accouplement (18).

4. Système adaptateur de balai d'essuie-glace selon l'une quelconque des revendications précédentes, **caractérisé en ce que** l'unité d'accouplement (18) est prévue pour être accouplée de manière amovible à l'un des au moins deux éléments de connexion (12, 14, 16).

5. Système adaptateur de balai d'essuie-glace selon l'une quelconque des revendications précédentes, **caractérisé en ce que** l'unité d'accouplement (18) comprend au moins un premier élément d'accouplement (22) qui, dans un état monté, s'applique par engagement par correspondance de formes contre l'un des au moins deux éléments de connexion (12, 14, 16) et qui est prévu pour éviter un desserrement de l'élément de connexion (12, 14, 16) de l'unité d'adaptateur de balai d'essuie-glace (10).

6. Système adaptateur de balai d'essuie-glace selon la revendication 5, **caractérisé en ce que** l'unité d'accouplement (18) comprend.au moins un deuxième élément d'accouplement (24) qui, dans un état monté, s'applique par engagement par correspondance de formes contre l'un des au moins deux éléments de connexion (12, 14, 16) et qui est prévue pour éviter un desserrement de l'élément de connexion (12, 14, 16) de l'unité d'adaptateur de balai d'essuie-glace (10).

7. Système adaptateur de balai d'essuie-glace selon au moins la revendication 5, **caractérisé en ce que** le premier élément d'accouplement (22) est formé par un premier élément d'encliquetage (26).

8. Système adaptateur de balai d'essuie-glace selon la revendication 7, **caractérisé en ce que** le premier élément d'encliquetage (26) peut être dévié élastiquement autour d'un axe transversal (30).

9. Système adaptateur de balai d'essuie-glace selon au moins la revendication 6, **caractérisé en ce qu'**au moins le deuxième élément d'accouplement (24) est formé par un deuxième élément d'encliquetage (28).

10. Système adaptateur de balai d'essuie-glace selon la revendication 9, **caractérisé en ce que** le deuxième élément d'encliquetage (28) peut être dévié élastiquement autour d'un axe transversal (30).

11. Système adaptateur de balai d'essuie-glace selon l'une quelconque des revendications précédentes, **caractérisé par** au moins trois éléments de connexion formés différemment (12, 14, 16) qui sont prévus pour être accouplés à différents types d'adaptateurs de bras d'essuie-glace (100, 102, 104, 106, 108, 110, 112).

12. Système adaptateur de balai d'essuie-glace selon au moins la revendication 7, **caractérisé en ce qu'**au moins le premier élément d'encliquetage (26) entoure au moins en partie l'au moins un boulon de connexion (34) dans un état monté.

13. Système adaptateur de balai d'essuie-glace selon l'une quelconque des revendications précédentes, **caractérisé en ce qu'**au moins un élément de connexion (12, 16) des au moins deux éléments de connexion (12, 14, 16) présente un évidement transversal (36, 76) qui est prévu pour recevoir une goupille de fixation (114, 156) d'un adaptateur de bras d'essuie-glace (100, 112).

14. Système adaptateur de balai d'essuie-glace selon la revendication 13, **caractérisé en ce que** l'évidement transversal (36, 76) de l'au moins un élément de connexion (12, 16) des au moins deux éléments de connexion (12, 14, 16), considéré dans une direction longitudinale (68) de l'élément de connexion (12, 16), est disposé dans la région du boulon de connexion (34).

15. Système adaptateur de balai d'essuie-glace selon l'une quelconque des revendications précédentes, **caractérisé en ce qu'**au moins un élément de connexion (14) des au moins deux éléments de connexion (12, 14, 16) présente un évidement longitudinal (38) qui ouvre l'élément de connexion (14) dans une direction verticale (40) et qui est prévu pour recevoir une région d'extrémité (42) de l'adaptateur de bras d'essuie-glace.

16. Système adaptateur de balai d'essuie-glace selon l'une quelconque des revendications précédentes, **caractérisé en ce qu'**au moins un élément de connexion (12, 14) des au moins deux éléments de connexion (12, 14, 16) présente une formation latérale (44).

17. Système adaptateur de balai d'essuie-glace selon l'une quelconque des revendications précédentes, **caractérisé en ce que** l'unité d'adaptateur de balai d'essuie-glace (10) présente au moins deux nervures longitudinales (46, 48) qui s'étendent au moins essentiellement parallèlement l'une à l'autre et qui sont disposées sur un corps de base (50) de l'unité d'adaptateur de balai d'essuie-glace (10).

18. Système adaptateur de balai d'essuie-glace selon au moins la revendication 6, **caractérisé en ce que** l'unité d'adaptateur de balai d'essuie-glace (10) présente une nervure de sécurité (52) qui, considérée dans une direction de balayage (54), est disposée entre le premier élément d'accouplement (22) et le deuxième élément d'accouplement (24) et qui est prévue pour protéger le premier élément d'accouplement (22) et le deuxième élément d'accouplement (24) contre un endommagement lors du montage.

19. Système adaptateur de balai d'essuie-glace selon l'une quelconque des revendications précédentes, **caractérisé en ce que** l'unité d'adaptateur de balai d'essuie-glace (10) présente une surface de butée oblique (56) qui est prévue pour limiter une déviation d'un élément de connexion (12, 14, 16) des au moins deux éléments de connexion (12, 14, 16) par rapport à un corps de base (50) de l'unité d'adaptateur de balai d'essuie-glace (10).

20. Balai d'essuie-glace (58) comprenant un système adaptateur de balai d'essuie-glace selon l'une quelconque des revendications précédentes.
